# EUROPEAN PATENT APPLICATION

(11) **EP 4 729 201 A1**
(43) Date of publication of application: **22.04.2026**
(21) Application number: 24207651.1
(22) Date of filing: 18.10.2024
(51) Int. Cl.: B21D 43/05

(54) **DEVICE, PRESS AND METHOD FOR PRESS-PROCESSING WORKPIECES**

(71) Applicant: Precision Resource, Inc., Shelton, CT 06484 (US)
(72) Inventor: Marks, Tony, Cambridge, N3H 4R7 (CA); McGlynn, Joe, Cambridge, N3H 4R7 (CA)
(74) Representative: Fuchs Patentanwälte Partnerschaft mbB

(57) **Abstract**

The invention concerns a device, a press and a method for press-processing workpieces.

The device (10) includes:
- a plurality of workpiece processing units (18.1-18.6, 18.1 '-18.6') arranged along a curved path (P);
- a workpiece transfer unit (22) that is rotatable about a rotation axis (R) and that is configured to move at least one workpiece (30) successively along the workpiece processing units (18.1-18.6, 18.1'-18.6');
wherein at least one of the workpiece processing units (18.1-18.6, 18.1'-18.6') is a press-processing unit that is configured to perform a press-processing operation on the workpiece (30).

## Description

The invention concerns a device, a press and a method for press-processing workpieces.

### Background

Press-processing involves press-based processing operations performed on a workpiece. For example, press-forming as one example of press-processing includes shaping a workpiece, usually metal, by placing it between two dies or punches and applying high pressure to the workpiece. The processing often requires the use of workpiece transfer systems, e.g. for loading not yet press-formed workpieces into the press and unloading the press-formed workpieces from the press after press forming. These workpiece transfer systems ensure that workpieces are accurately positioned within the press and allow for continuous and typically cyclic operation.

Often, workpieces are sequentially processed, e.g. by performing a sequence of press-processing operations or other operations on the workpiece. Typically, there is a dedicated processing unit, e.g. in the form of a stand-alone press, for each one of the operations in said sequence. Transfer units are provided between each pair of subsequent processing units to transfer workpieces between them. An example can be found in EP 1 880 837 B1. Such arrangements, which typically resemble a manufacturing line and more specifically a press line, require a large number of independently operable processing units, each one typically comprising a complete and individual press actuator. This can be marked by a low efficiency, e.g. due to high costs and high complexity and due to requiring lots of space.

The present invention thus seeks to improve efficiency in connection with press-processing workpieces.

### Details of invention

Accordingly, a device for press-processing workpieces is suggested, the device including:
- a plurality of workpiece processing units arranged along a curved path;
- a workpiece transfer unit that is rotatable about a rotation axis and that is configured to move at least one workpiece successively along the workpiece processing units;
wherein at least one of the workpiece processing units is a press-processing unit that is configured to perform a press-processing operation on the workpiece.

Throughout this disclosure, the workpiece processing units may also be referred to as processing units, i.e. these terms may be used interchangeably. The press-processing may include any processing performed by a press on the workpiece. This processing may in particular include that a pressing force generated by the press is used for processing the workpiece and is e.g. exerted at least to some extent on the workpiece. Nonlimiting examples of press-processing of a workpiece include fineblanking, blanking, stamping, deep drawing, bending, punching, embossing, coining, forging and trimming.

Accordingly, the processing unit being configured to perform a press-processing may include the processing unit being configured to perform the press-processing at least when connected to a press. Put differently, the processing unit may be configured to be movable and/or pressable by a press so as to perform the press-processing.

The device is not limited to exclusively perform press-processing operations. At least one of the processing units may also be configured to perform a workpiece processing different from press-processing. Non-limiting examples of such different workpiece processing operations include loading, unloading and/or inspection of the workpiece, e.g. a dimensional inspection or surface inspection which may each be done e.g. by way of vision systems or laser scanners.

The device may be arrangeable in a press, e.g. a hydraulic press. It may resemble or comprise a tool or a tool plate set that is fixable to a press, for example to an upper and/or lower plate of the press, such as an upper and/or lower bolster plate.

Moving workpieces along the workpiece processing units may include moving them along the curved path and/or generally along a curved path. For example, the workpieces may be rotated about the same rotation axis as the workpiece transfer unit. In one example, the workpiece transfer unit is configured to push the workpieces, thereby moving them through the devices e.g. sliding member.

The workpiece transfer unit may be plate-shaped or comprise at least one plate-shaped member. The rotation axis may extend at an angle and in particular orthogonally to a plane of said plate-shaped member. The plane may be a plane of symmetry of the plate -shaped member and/or a centre plane of said member which may be located at a medium thickness of the plate-shaped member. Additionally or alternatively, the plane may extend in parallel to an upper and/or lower surface of the plate-shaped member.

The workpiece may be at least partially received in the plate -shaped member or generally in the workpiece transfer unit. For example, it may be received in a cut out or recess at a circumference of the plate-shaped member and/or generally of the workpiece transfer unit. In one example, the workpiece transfer unit and in particular a plate-shaped member thereof comprises a plurality of receiving sections. These may in particular be spaced equidistantly about the rotation axis and/or may be distributed along its circumference, in particular equidistantly distributed.

The workpiece may be progressively processed and in particular formed when moving along and/or through the sequence of workpiece processing units. For example, it may be processed in a stepwise manner until reaching a final processed state in which it is unloaded from the device.

The workpiece may be circular and/or rotation symmetric. This may help to lower the requirements in terms positioning accuracy e.g. within the workpiece transfer unit. Additionally or alternatively, the workpieces may be loaded into the device as preshaped and/or stand-alone objects. Put differently, they may be individual objects that may not have to be cut or otherwise separated from larger material volumes inside the device, such as from a continuous metal strip. This may help to reduce complexity and simplify transferring of the workpieces within and through the device.

With the disclosed device, processing of a workpiece and in particular a progressive or stepwise processing by a sequence of processing units can be implemented at a reduced complexity and/or within a limited space. The same applies to the workpiece transfer unit which, e.g. by way of a simple rotation, can be configured to transfer the workpieces between the processing units. As described below in further detail, the device may be coupable to and operable by a single press. Each of the above helps increase efficiency of the workpiece processing.

According to one example, among the workpiece processing units at least the press-processing unit comprises a first sub-unit arranged at a first plate of the device and a second sub-unit arranged at a second plate of the device, wherein a distance between the first plate and second plate is variable. The plates may be arranged to face one another and/or may be congruently arranged. The plates may be or comprise tool plates, such as an upper and lower tool plate as typically used in existing hydraulic presses. The device may only have one first plate and one second plate at which the processing units may be arranged.

The first sub-unit and the second sub-unit may be arranged opposite to one another and/or may be arranged congruently to one another. At a reduced and in particular minimal distance between the first and second plate, at least one of the first and second sub-unit may at least partially be received in the respective other one of the first and second sub-unit. Generally, the first and second sub-unit may be configured to at least temporarily press the workpiece in between them.

The plates may be movable towards and away from another, thereby varying the distance between them. Accordingly, the distance may be measured orthogonally to a centre plane, e.g. extending at a medium thickness of each plate, and/or orthogonally to at least one outer side or surface of the plates. When moved close to one another, the press-processing may be performed or may have been completed. When moved away from one another, the processed workpiece may be removable from the processing unit and/or the workpieces may be moved to a respectively next processing unit in the sequence of processing units.

Depending on the type of press-processing operation performed, the first sub-unit and second sub-unit may comprise processing members, such as certain tools or tool components. For example, one of the first sub-unit and the second sub-unit may comprise a punch and the respective other one of the first sub-unit and the second sub-unit may comprise a counter-punch, wherein the punch and the counter-punch are e.g. configured to press the workpiece in between them. This pressing may in particular occur at a reduced and/or minimum distance of the first and second sub-unit and/or of the plates in which said sub-units are respectively arranged.

Additionally or alternatively, at least the press-processing unit may comprise a die and/or a guide plate. A section of the workpiece that is pressed or clamped between the punch and counter-punch may be movable past the die and/or guide plate to e.g. perform blanking and in particular fineblanking. Another section of the workpiece may be clamped between the die and guide plate. This section may be directly adjacent to and/or may merge into the section of the workpiece clamped between the punch and counter-punch. Accordingly, the punch and counter-punch may be movable relative to the die and guide plate. For example, the die and guide plate may comprise an opening, (e.g. a through hole) in which the punch and counter-punch may be received and/or are at least temporarily insertable.

According to a further embodiment, at least one of the workpiece processing units is a workpiece loading unit that is configured to load the workpiece or, in other words, to insert or transfer the workpiece into the device. In one example, the workpiece loading unit may be configured to move and/or arrange the workpiece, so that it can be transferred by the workpiece transfer unit to a first workpiece processing unit.

When loaded by the loading unit, the workpiece may be in an unprocessed state. The unprocessed state may include that the workpiece has so far been unprocessed by the disclosed device and/or by a method or press described further below. Yet, it may have been pre-processed by other devices, so as to not resemble some arbitrary raw material object.

In one example, at least one of the workpiece processing units is a workpiece unloading unit that is configured to unload the processed workpiece from the device. The processed state may include that the workpiece has been processed and in particular fully processed by the disclosed device and/or by a method or press described further below. In particular, the workpiece may have been press-processed and thus changed compared to its unprocessed state when loaded. The unloading unit may be configured to receive the workpiece from the workpiece transfer unit and/or release it therefrom. Additionally or alternatively, the unloading unit may be configured to transfer and/or guide the workpiece out of the device and e.g. towards some magazine or conveyor.

Integrating a loading and/or unloading unit may help to concentrate units needed for a continuous and in particular synchronized and/or cyclic workpiece processing in the device, thereby increasing efficiency.

According to a further embodiment, the processing units are equidistantly spaced from one another. This may in particular include an optional plurality of press-processing units. The equidistant spacing may simplify the workpiece transfer by the workpiece transfer unit. For example, this may enable that rotations about the rotation axis may comprise fixed angular amounts. Moreover, this may help to more equally distribute processing forces within the device, which may locally concentrate in the regions of the respective processing units.

In one embodiment, the curved path defines at least a section of a circular circumference. This may enable a particular efficient and accurate transfer of workpieces between the processing units, e.g. by moving and in particular pushing them along said circular circumference. The rotation axis about which the workpiece transfer unit rotates may intersect a center point about which the circular circumference extends.

In one example, the processing units are subdivided into a first set of processing units that are distributed along a first segment of the curved path and a second set of processing units that are distributed along a second segment of a curved path, wherein the first and second set comprise similar types of processing units. This may allow for processing workpieces by each of the first and second sets, in particular simultaneously and/or in a parallelized manner, thereby increasing throughput of workpieces through the device. Each of the first and second segment may comprise at most half of a length of the curved path. In one example, each of the first and second segment includes an angular section of not more than 180°.

Generally, each of the processing units or at least more than half of the processing units may be positioned equidistantly from the rotation axis, e.g. in a radial direction, and/or equidistantly from another, e.g. in a circumferential direction. In this context in particular, the rotation axis may extend through a geometric centre of any of the plate-shaped member of the workpiece transfer unit, the first plate and the upper plate. Such an arrangement of processing units may help to equalize the distribution of processing forces within the device and e.g. limit off-center loads.

In one example, the first set and second set of processing units are arranged in point symmetry with respect to the rotation axis. Again, this may help to equalize processing forces. In particular, when compared with a linear transfer which is common in conventional solutions, the disclosed concept of rotating and equalizing forces where the center of the force is e.g. the center of the device and/or press and in particular of a press table, allows to eliminate off center loading. This helps to improve dimensional accuracy of the workpieces, improved tool life as well as improved press life and/or improved the life of the overall equipment used.

The point symmetry may also apply with respect to the types of processing units, thereby enabling a parallel and successive processing of workpieces, in particular when rotating the transfer unit stepwise in only one direction. For example, a workpiece may initially be received in a processing unit of a first type in each of the first and second set, meaning that there may at least be two workpieces overall. A rotation by the workpiece transfer unit may move the workpieces in each set to a processing unit that is of a second type. The first and second set may include processing units of further types, e.g. of at least a third type and more. This again shows that with the above configuration, a simultaneous processing of plural workpieces can be achieved, wherein these workpieces may in particular be processed by same types of processing units.

The above arrangement of processing units may also be described as follows: Positions of the processing units within first and second set of processing units may be mirror symmetric with respect to one another. Additionally or alternatively, when moving in a clockwise or counterclockwise direction about the rotation axis of the workpiece transfer unit or about some other centre axis of the curved path, a sequence of types of processing units may be the same within the first and second set.

In one example, each of the first and second segment of the curved path along which the first and second set of processing units are arranged comprises a section of a circular circumference that extends concentrically with respect to the rotation axis. This simplifies moving the workpieces by way of a rotation of the workpiece transfer unit in between the processing units.

Additionally or alternatively, each of the first and second segment extends along an arc length of between at least 90° and up to 180°.

According to a further example, the workpiece transfer unit has a number of receiving sections that are each configured to receive a workpiece.

In a further example, it may be provided that the number of the receiving sections matches the number of the processing units and/or the workpiece transfer unit may be arrangeable so that the circumferential positions of the receiving sections about the rotation axis match the circumferential positions of the processing units. This simplifies the transfer of workpieces and e.g. allows for rotating the workpiece transfer unit by constant angular amounts.

In one example the receiving units are configured to position the workpiece by means of a form fit. Accordingly, it may optionally be provided the receiving units are free of any actuators to clamp or otherwise hold the workpieces. Again, this helps reduce complexity.

According to one example, the workpiece transfer unit is configured to move the at least one workpiece along a surface area of the device, wherein at least the press-processing unit comprises a free space when assuming a non-processing state, wherein the workpiece transfer unit is configured to move the workpiece into and out of said free space. This enables accurate movement of the workpiece within the device at a limited mechanical complexity. The workpiece may be in contact with the surface area. The surface area can be planar or non-planar, continuous or discontinuous, formed by a single or by several parts. For example, it may partially be formed by of comprise surfaces of first and/or second sub-units of the processing units.

The workpiece may be pushed along and/or slide along the surface area when being moved by the workpiece transfer unit. The free space may least partially be flush with said surface area and/or may extent in a same spatial plane as said area. For example, the surface area or at least a virtual extension thereof may intersect the free space. In one example, the free space may result from at least a part of the processing unit being retracted and/or being lifted relative to the surface area. This part may be comprised by one of the first and second sub-units discussed above.

In one example, at least a part of the processing unit, that is e.g. comprised by the first- or second sub-unit discussed above, may be level or flush with the surface area. This way, the workpiece may be moved into the free space and/or out of said space without having to cross significant steps. The surface area may generally be plane and/or level, but may e.g. include recesses.

In a further embodiment, a receiving section of the workpiece transfer unit for receiving the workpiece is configured to be aligned with the free space and/or the workpiece may be movable relative to the workpiece transfer unit in parallel to the rotation axis during a processing by the press-processing unit.

In the non-processing state, a punch and counter-punch are spaced apart, creating a free space in between them. A transfer unit pushes the workpiece along a surface area and into this free space. Within the free space, at least one of the punch or counter-punch is movable relative to the surface area and in particular along the rotation axis. When the workpiece is positioned, the punch and counter-punch move towards each other to press or clamp the workpiece, causing it to be moved relative to the surface area and out of the receiving section. When the pressing operation is completed, the punch and counter-punch are released or opened and return to their original positions, making the workpiece level with the surface area again and arranging it in the receiving section. The workpiece transfer unit then pushes the workpiece out of the free space along the surface area.

Optionally, each receiving section of the workpiece transfer unit may comprise at least one stop member for limiting a movement of a received workpiece parallel to and/or along the rotation axis. The stop member may be retractable, e.g. when contacted by one of the optional first and second sub-units of a workpiece processing unit. The stop member may be spring-loaded or may be movable by means of an actuator. The stop member may help to increase positioning accuracy of workpieces within the device.

The invention also concerns a press for press-processing workpieces, in particular a hydraulic press, the press comprises a device for press-processing workpieces, the device including:
- a plurality of workpiece processing units arranged along a curved path;
- a workpiece transfer unit that is rotatable about a rotation axis and that is configured to move at least one workpiece successively along the workpiece processing units;
wherein at least one of the workpiece processing units is a press-processing unit that is configured to perform a press-processing operation on the workpiece, and wherein among the processing units at least the press-processing unit comprises a first sub-unit arranged at a first plate of the device and a second sub-unit arranged at a second plate of the device, wherein a distance between the first plate and second plate is variable. Moreover, the device may be configured according to any further example disclosed herein.

The press also comprises a force generating assembly that is configured to generate a force for moving the first and second plate relative to one another. The force generating assembly may e.g. include at least one hydraulic cylinder

The invention also concerns a method for press-processing workpieces, the method including:
moving, by a workpiece transfer unit that is rotatable about a rotation axis, at least one workpiece along a plurality of workpiece processing units that are arranged along a curved path;
processing the workpiece by each workpiece processing unit, wherein at least one of the workpiece processing units is a press-processing unit that is configured to perform a press-processing operation on the workpiece.

Any explanations, variations and embodiments disclosed herein in connection with the device for press-processing workpieces may equally apply to the above press or method, and vice versa. This especially concerns features that are equally comprised by the disclosed device as well as by the disclosed method and/or the disclosed press.

### Description of the Figures

Exemplary embodiments of the invention are discussed in the following with reference to the attached schematic Figures. Same features may be assigned same reference signs throughout the Figures.
- Figure 1: is an illustrative schematic view showing part of a press according to an embodiment of this invention, in which a device according to an embodiment of this invention is arranged. The press and device are configured to perform a method according to an embodiment of this invention.
- Figure 2: is a side view of the press and device of Figure 1 in an opened, non-processing state.
- Figure 3: is a partially transparent top view of the press and device of Figures 1 and 2.

### Examples

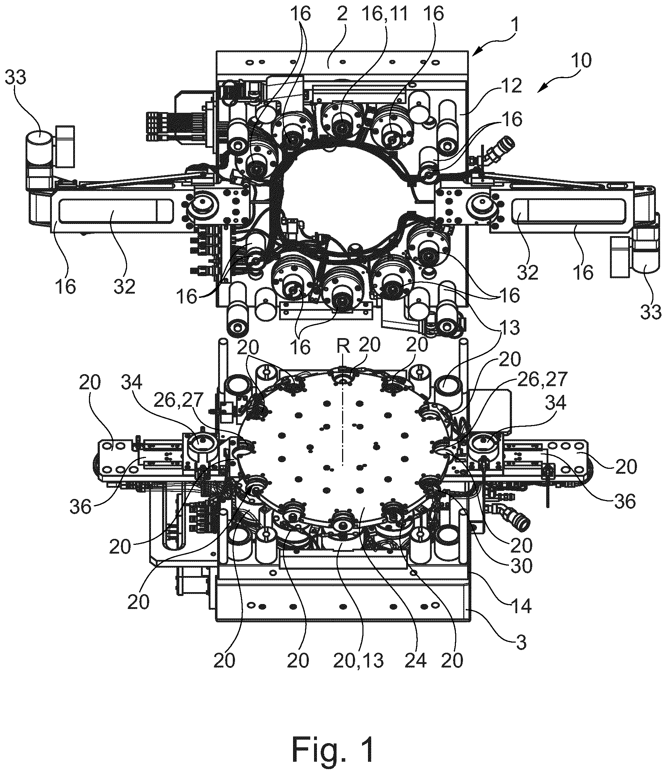

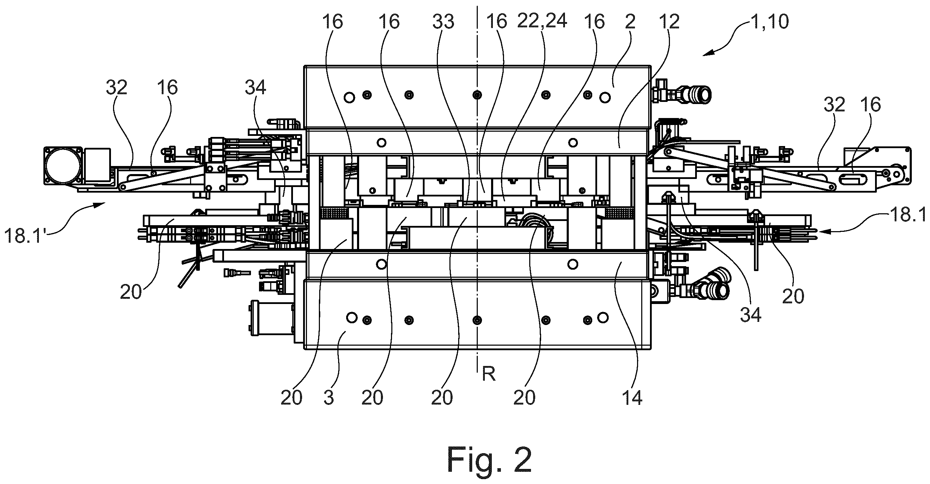

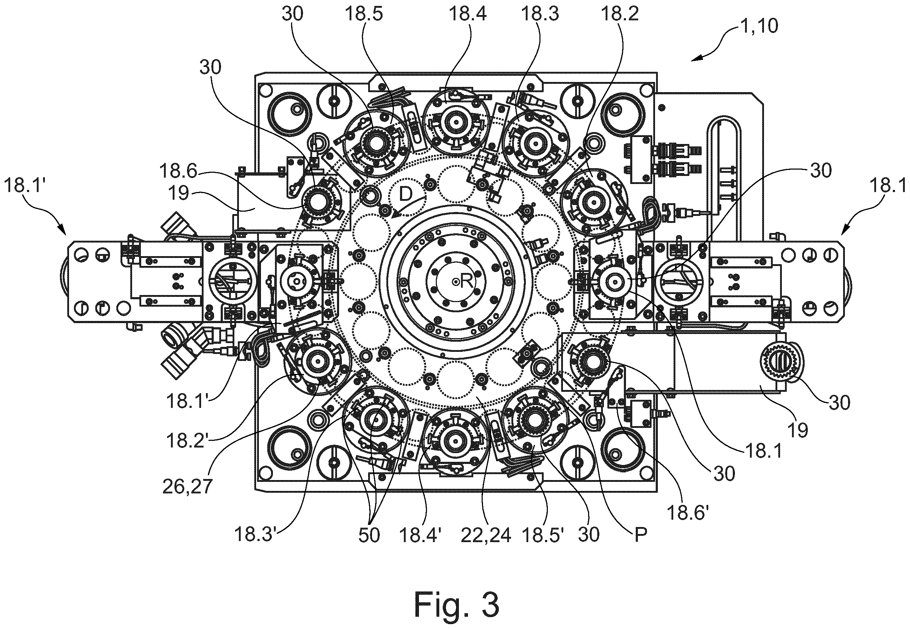

Figure 1 shows part of a hydraulic press 1 according to an embodiment of the invention. Here below, this Figure will be jointly discussed with Figures 2 and Figure 3. Figure 2 is a side view of the press of Figure 1, whereas Figure 3 is a partially transparent top view of the press of Figure 1.

The depicted parts of the press 1 include an upper bolster plate 2 and a lower bolster plate 3. For illustrative purposes only, the upper bolster plate 2 along with the below-discussed members coupled thereto is tilted or, in other words, flipped open. It's actual arrangement within the press 1 is depicted in Figure 2 and is also derivable from Figure 3.

A non-depicted part of the press 1 includes a force generating assembly and more precisely a press force generating assembly. This assembly may be configured according to known examples and may e.g. comprise one or more hydraulic cylinders as well as a hydraulic pressure source for moving the upper and lower bolster plates 2, 3 towards and away from one another.

A device 10 according to an embodiment of the invention is coupled to the press 1. The device 10 comprises an upper plate 12 which may also be referred to as an upper tool plate. The upper plate 12 is fixed to the upper bolster plate 1 so as to be jointly movable therewith.

The device 10 also comprises a lower plate 14 which may also be referred to as a lower tool plate. The lower plate 14 is fixed to the lower bolster plate 2 so as to be jointly movable therewith. The upper and lower plate 12, 14 are fixed to the respective ones of the upper and lower bolster plates 1, 2, so as to be arranged oppositely to and face one another. Specifically, they are fixed to inner surfaces of the upper and lower bolster plates 1, 2 wherein said inner surfaces face each other.

At inner sides of the upper and lower plates 12, 14, a number of below discussed members are arranged. First of all, these include guidepost sets 13, only one of which is marked with a respective reference sign in Figure 1. These guidepost sets 13 help to maintain a congruent arrangement of the plates 12, 14 relative to one another.

Further members arranged at the upper and lower plates 12, 14 are in particular provided for processing and transferring workpieces. In case of the upper plate 12, these members e.g. include a number of first sub-units 16 of processing units 18.1-18.6, 18.1'-18.6' (see also Figures 2 & 3). In case of the lower plate 14, these members e.g. include second sub-units 20 of processing units 18.1'-18.6' (see also Figures 2 & 3). Each sub-unit 16 is arranged oppositely to one of the second sub-units 20, see in particular Figure 3, to from a respective one of the processing units 18.1'-18.6'. The exact types and functions of the processing units 18.1'-18.6' are discussed further below.

From Figures 1 and 3, it can be gathered that the processing units 18.1-18.6, 18.1'-18.6' are arranged along a curved path P and in particular along a circular path P. Said path P is indicated by a dotted circumference in Figure 3. The processing units 18.1-18.6, 18.1'-18.6' are spaced equidistantly from one another along said path P. They are also equidistantly spaced in a radial direction from a center of the device 10 through which a rotation axis R extends in Fig. 3.

The device 10 further comprises a workpiece transfer unit 22 which can best be seen in Figure 1. The workpiece transfer unit 22 comprises a plate-shaped member 24. The plate-shaped member 24 is generally arranged in parallel to and/or sandwiched in between the previously discussed plates 1, 2, 12, 14 of the press 1 and the device 10. In the shown example, the plate-shaped member 24 is circular and rotatable about the rotation axis R, see also Figures 2 and 3. The rotation axis R also corresponds to an axis along which the above discussed plates 1, 2, 12, 14 are movable relative to each other. An actuator for rotating the plate-shaped member 24 is not specifically shown and may e.g. be an electric motor.

The plate-shape member 24 has a number of recesses 26 that are distributed along its circumference. The recesses 26 each from a receiving section 27 for receiving a single workpiece 30. They may also be referred to as a receiving cavity.

In the shown example, the processing units 18.1-18.6, 18.1'-18.6' are spaced equidistantly from one another along said path P. As can best be seen in Fig. 1, the spacing and positioning of the recesses 26 about the rotation axis R and/or along the curved path P of Figure 3 matches that of the processing units 18.1-18.6, 18.1'-18.6'. Accordingly, each recess 26 can be arranged in the area of a processing unit 18.1-18.6, 18.1'-18.6' and/or so as to at least partially overlap therewith and/or so as to be at least partially arranged in between the respect first and second sub-units 18, 20 of said processing unit 18.1-18.6, 18.1'-18.6'.

As an exemplary feature, the recess 26 has part-circular cut-outs defining respective part-circular openings e.g. in the top view of Fig. 3. The recesses 26 and more precisely their part-circular circumference opens radially to the outside, so that workpieces 30 can be moved in or out of the recesses 26 by a radial motion. The radial direction extends orthogonally to the rotation axis R.

The recesses 26 each have a lead and a radius which allows the workpiece 30 to enter in a pre-determined diameter with designed clearance. This positions the workpiece 30 using its outside diameter by way of a form fit with the recess 26. Optionally, stop members 50 may be provided that help to hold and e.g. clamp the workpieces 30 in the recesses, see Figure 3.

The plate-shaped member 24 can be rotated about the rotation axis R in a stepwise manner so that each recess 26 is sequentially movable from one processing unit 18.1-18.6, 18.1'-18.6' to a respectively circumferentially adjacent one. The circumferential direction extends about the rotation axis R.

This way, a workpiece 30 can be moved and in particular circumferentially pushed from processing unit 18.1-18.6, 18.1'-18.6' to processing unit 18.1-18.6, 18.1'-18.6'. Figures 1-3 generally depict a simultaneous processing of multiple workpieces 30, only some of which are marked with respective reference signs.

In the following, the different processing units 18.1-18.6, 18.1'-18.6' are discussed in further detail. The processing units 18.1-18.6, 18.1'-18.6' can be divided into two sets, wherein the first set comprises processing units 18.1-18.6 and a second set comprises processing units 18.1'-18.6'. As can best be seen in Figure 3, the processing units 18.1-18.6, 18.1'-18.6' of each of these sets sequentially extend along a continuous segment of the curved path P. These segments are equal in length and each cover slightly less than half the circumferential length of the depicted circular path P. Accordingly, each set of processing units 18.1-18.6, 18.1'-18.6' extends within an angular section of not more than 180° and e.g. not less than 120°.

The numbering of the processing units 18.1-18.6, 18.1'-18.6' by way of their respective reference signs indicate their different types. The type of a processing unit 18.1-18.6, 18.1'-18.6' in particular refers to and/or is defined by its performed processing operation.

All of the processing units 18.1-18.6 within the first set are different from one another at least in that they process the workpiece to different extents, although at least some of processing units 18.1-18.6 may be of same types (e.g. may each be stamping or fineblanking units). Similarly, all of the processing units 18.1'-18.6' within the second set are different from one another.

On the other hand, each processing unit 18.1-18.6, 18.1'-18.6' is of the same type and is in fact identical in terms of the exactly performed processing operation to a comparably numbered 18.1-18.6, 18.1'-18.6' in the respective other set. More precisely, the processing units 18.1, 18.1' are of the same type and process workpieces identically, the processing units 18.2, 18.2' are of the same type and process workpieces identically, the processing units 18.3, 18.3' are of the same type and process workpieces identically, the processing units 18.4, 18.4' are of the same type and process workpieces identically, the processing units 18.5, 18.5' are of the same type and process workpieces identically and the processing units 18.6, 18.6' are of the same type. In these case, processing workpieces identically means that the workpiece is e.g. fineblanked, press-formed or otherwise processed in an identical manner, so as to e.g. have an identical shape, form and/or dimensions after having been processed by a respective same pair of processing units 18.1, 18.1'; 18.2, 18.2'; 18.3, 18.3'; 18.4, 18.4'; 18.5, 18.5'; 18.6, 18.6'. These may at least apply to respective pairs of press-processing units.

Especially in Figure 3 it can be seen that the processing unit 18.1-18.6, 18.1'-18.6' are generally arranged in point symmetry with respect to the rotation axis R. Moreover, each pair of the previously listed pairs of processing units 18.1, 18.1'; 18.2, 18.2'; 18.3, 18.3'; 18.4, 18.4'; 18.5, 18.5'; 18.6, 18.6' that are of the same type are arranged in point symmetry with respect to the rotation axis R. As previously explained, the point symmetry may advantageously help to equalize forces within the press 1 and/or device 10.

When operating the device 10, a workpiece 30 is moved sequentially from a processing unit 18.1-18.6, 18.1'-18.6' to a respectively adjacent one along the curved path P and in a rotation direction D (see Figure 3) by the plate -shaped member 24. This movement starts from the first processing unit 18.1, 18.1' in each set of processing units 18.1-18.6, 18.1'-18.6'.

Providing the two sets of set of processing units 18.1-18.6, 18.1'-18.6' enables a parallelized processing of workpieces 30, with each set of processing units 18.1-18.6, 18.1'-18.6' essentially resembling one processing line for the workpieces 30.

The first processing unit 18.1, 18.1' in each set of processing units 18.1-18.6, 18.1'-18.6' is a loading unit. As can best be seen in Figures 1 & 2, each loading unit and more precisely each first sub-unit 16 thereof comprises a conveyor belt 32 that is driven by a motor 33 and that receives single workpieces 30 from a non-illustrated magazine. The workpieces 30 are in an initial unprocessed state. In the present example, in this initial unprocessed state the workpieces 30 are planar circular plates that having a single central through-hole (see Figure 3). The conveyor belt 32 moves the workpieces 30 towards the rotation axis R, i.e. radially inwards, until they fall into a receiving part 34 comprised by the second sub-unit 20. The second sub-unit 20 further comprises a pusher 36 that is configured to push a workpiece 30 received in the receiving part 34 radially inwards towards an oppositely arranged receiving section 27 of the plate-shaped member. The actions of the loading unit are synchronized with the rotating movement of the plate-shaped member 24, so that an empty receiving section 27 is always present opposite the pusher 36 when it pushes the workpiece 30 radially inwards.

The second processing unit 18.2, 18.2' in each set of processing units 18.1-18.6, 18.1'-18.6' is configured to perform an initial press processing, e.g. adding further form features by stamping. For doing so, the respective first and second subunits 16, 20 comprise a punch 11 and counterpunch 13 which are operated and interact with one another according to established principles to perform the press-processing. The punch 11 and counterpunch 13 are marked for one pair of first and second subunits 16, 20 in Figure 1.

The third to fifth processing units 18.3, 18.3' - 18.5, 18.5' in each set of processing units 18.1-18.6, 18.1'-18.6' are also each configured to perform a press-processing operation with at least one of these units being configured to perform a fineblanking operation. For doing so, the respective at least one processing unit 18.3, 18.3' - 18.5, 18.5' comprises a die and guide plate adjacent to and surrounding a punch and counterpunch of the respective first and second subunits 16, 20.

As can best be seen in Figures 1 & 3, the workpiece 30 is thus formed from its above-described initial state into a cog.

The sixth and final processing units 18.6, 18.6' in each set of processing units 18.1-18.6, 18.1'-18.6' are unloading stations in which the processed workpieces 30 are moved above and fall onto a slide member 19 (see Figure 3). From there, they may fall into a non-illustrated magazine or onto a conveyor belt or the like. Note that for illustrative purposes, the slide members 19 are only depicted in Figure 2, but not in Figures 1 and 3.

Generally, the workpieces 30 are pushed along adjacent surfaces of the second subunits 20 of each processing unit 18.1-18.6, 18.1'-18.6', see Figure 1, when being transferred by the workpiece transfer unit 22. These surfaces may form a surface area along and in contact with which the workpieces 30 slide. As indicated in Figure 1 and also evident from Figure 3, at the sixth processing units 18.6, 18.6', this surface area is interrupted or in other words missing. As a result, the workpieces 34 fall onto the slide member 19 which resembles or is comprised by a second subunit 20 of the sixth processing units 18.6, 18.6'.

From the above and further in view of especially Figures 1 and 3, the following becomes apparent: At each time, a workpiece 30 is present in each of the processing units 18.1-18.6, 18.1'-18.6'. The first and second set of processing units 18.1-18.6, 18.1'-18.6' perform a parallelized sequential and/or stepwise processing of the workpieces 30 from their initial unprocessed to their final and processed state. Therefore, the device 10 essentially includes two processing lines operating in parallel, each processing and comprising one of that sets of processing units 18.1-18.6, 18.1'-18.6'.

Moreover, the processing units 18.1-18.6, 18.1'-18.6' operate simultaneously. In particular, at least the press-processing units perform their press-processing operation simultaneously, namely when the upper and lower plates 12, 14 are moved towards one another. Once said simultaneous operation and in particular press-processing by each of the processing units 18.1-18.6, 18.1'-18.6' has been completed, the upper and lower plates 12, 14 are moved away from one another. In this open configuration of the device 10, which is shown in Figure 2, a free space 33 is defined between each first and second sub-unit 16, 20 of at least the press-processing processing units 18.1-18.6, 18.1'-18.6'. A workpiece 30 is positioned in each of said free spaces 33 and is aligned and in particular flush with an adjacent surface area along which the workpiece 30 may slide when being moved by the workpiece transfer unit 22.

Moreover, in this opened configuration the plate-shaped member 24 is rotated by an angular amount that resembles an angular distance between two circumferentially adjacent processing units 18.1-18.6, 18.1'-18.6' in each set of processing units 18.1-18.6, 18.1'-18.6'. Put differently, in the opened configuration each workpiece 30 is moved by the plate-shaped member 24 to a respectively adjacent processing unit 18.1-18.6, 18.1'-18.6', so that a sequential processing operation may be performed. This processing operation may e.g. be an unloading in the sixth and final processing units 18.6, 18.6'.

Following that, the upper and lower plates 12, 14 are again moved towards one another, so that each processing unit 18.1-18.6, 18.1'-18.6' again performs their processing operations on the workpieces 30 which they have just received as a result of rotating the plate-shaped member 24.

## Claims

1. A device (10) for press-processing workpieces (30), the device (10) including:
- a plurality of workpiece processing units (18.1-18.6,18.1'-18.6') arranged along a curved path (P);
- a workpiece transfer unit (22) that is rotatable about a rotation axis (R) and that is configured to move at least one workpiece (30) successively along the workpiece processing units (18.1-18.6, 18.1'-18.6');
wherein at least one of the workpiece processing units (18.1-18.6, 18.1'-18.6') is a press-processing unit that is configured to perform a press-processing operation on the workpiece (30).

2. The device (10) according to claim 1,
wherein the press-processing operation includes one of: fineblanking, blanking, stamping, deep drawing, bending, punching, embossing, coining, forging, trimming.

3. The device (10) according to claim 1 or 2,
wherein among the workpiece processing units (18.1-18.6, 18.1'-18.6') at least the press-processing unit comprises a first sub-unit (16) arranged at a first plate (12) of the device (10) and a second sub-unit (20) arranged at a second plate (14) of the device (10), wherein a distance between the first plate (12) and second plate (14) is variable,
in particular wherein one of the first sub-unit (16) and the second sub-unit (20) comprises a punch (11) and wherein the respective other one of the first sub-unit (16) and the second sub-unit (20) comprises a counter-punch (13), wherein the punch (11) and the counter-punch (13) are configured to press the workpiece (30) in between them.

4. The device (10) according to any of the previous claims,
wherein at least one of the workpiece processing units (18.1-18.6, 18.1'-18.6') is a workpiece loading unit that is configured to load the workpiece (30) that is in an unprocessed state.

5. The device (10) according to any of the previous claims,
wherein at least one of the workpiece processing units (18.1-18.6, 18.1'-18.6') is a workpiece unloading unit that is configured to unload the processed workpiece (30) from the device (10).

6. The device (10) according to any of the previous claims,
wherein the workpiece processing units (18.1-18.6, 18.1'-18.6') are equidistantly spaced from one another; and/or
wherein the curved path (P) defines at least a section of a circular circumference.

7. The device (10) according to any of the previous claims,
wherein the workpiece processing units (18.1-18.6, 18.1'-18.6') are subdivided into a first set of workpiece processing units (18.1-18.6) that are distributed along a first segment of the curved path (P) and a second set of workpiece processing units (18.1'-18.6') that are distributed along a second segment of a curved path (P), wherein the first and second set comprise similar types of workpiece processing units (18.1-18.6, 18.1'-18.6').

8. The device (10) according to claim 7,
wherein the first set and second set of workpiece processing units (18.1-18.6, 18.1'-18.6') are arranged in point symmetry with respect to the rotation axis (R).

9. The device (10) according to claim 7 or 8,
wherein each of the first and second segment comprises a section of a circular circumference that extends concentrically with respect to the rotation axis (R); and/or
wherein each of the first and second segment extends along an arc length of between at least 90° and up to 180°.

10. The device (10) according to any of the previous claims,
wherein the workpiece transfer unit (22) has a number of receiving sections (27) that are each configured to receive a workpiece (30),
in particular wherein the number of the receiving sections (27) matches the number of the workpiece processing units (18.1-18.6, 18.1'-18.6') and/or wherein the workpiece transfer unit (22) is arrangeable so that the circumferential positions of the receiving sections (27) about the rotation axis (R) matches the circumferential positions of the workpiece processing units (18.1-18.6, 18.1'-18.6').

11. The device (10) according to claim 10,
wherein the receiving sections (27) are configured to position the workpiece (30) by means of a form fit.

12. The device (10) according to any of the previous claims,
wherein the workpiece transfer unit (22) is configured to move the at least one workpiece (30) along a surface area of the device (10), wherein at least the press-processing unit comprises a free space (33) when assuming a non-processing state, wherein the workpiece transfer unit (22) is configured to move the workpiece into and out of said free space (33).

13. The device (10) according to claim 12,
wherein a receiving section (27) of the workpiece transfer unit (22) receiving the workpiece (30) is configured to be aligned with the free space (33) and/or wherein the workpiece (30) is movable relative to the workpiece transfer unit (22) parallel to the rotation axis (R) during a processing by the press-processing unit.

14. A press (1) for press-processing workpieces (30),
the press (1) comprising a device (10) according to claim 3 and a force generating assembly that is configured to generate a force for moving the first and second plate (12, 14) relative to one another.

15. Method for press-processing workpieces (30), the method including:
moving, by a workpiece transfer unit (22) that is rotatable about a rotation axis (R), at least one workpiece (30) along a plurality of workpiece processing units (18.1-18.6, 18.1'-18.6') that are arranged along a curved path (P);
processing the workpiece (30) by each workpiece processing unit (18.1-18.6, 18.1'-18.6'), wherein at least one of the workpiece processing units (18.1-18.6, 18.1'-18.6') is a press-processing unit that is configured to perform a press-processing operation on the workpiece (30).

## Amended claims

### Amended claims in accordance with Rule 137(2) EPC.

1. A device (10) for press-processing workpieces (30), the device (10) including:
- a plurality of workpiece processing units (18.1-18.6, 18.1'-18.6') arranged along a curved path (P);
- a workpiece transfer unit (22) that is rotatable about a rotation axis (R) and that is configured to move at least one workpiece (30) successively along the workpiece processing units (18.1-18.6, 18.1'-18.6') in only one direction;
wherein at least one of the workpiece processing units (18.1-18.6, 18.1'-18.6') is a press-processing unit that is configured to perform a press-processing operation on the workpiece (30), wherein the workpiece transfer unit (22) is plate-shaped or comprises at least one plate-shaped member, wherein the workpiece transfer unit (22) comprises a number of recesses (26) that are distributed along its circumference, wherein the recesses (26) form each a receiving section (27) for receiving a single workpiece (30).

2. The device (10) according to claim 1,
wherein the press-processing operation includes one of: fineblanking, blanking, stamping, deep drawing, bending, punching, embossing, coining, forging, trimming.

3. The device (10) according to claim 1 or 2,
wherein among the workpiece processing units (18.1-18.6, 18.1'-18.6') at least the press-processing unit comprises a first sub-unit (16) arranged at a first plate (12) of the device (10) and a second sub-unit (20) arranged at a second plate (14) of the device (10), wherein a distance between the first plate (12) and second plate (14) is variable,
in particular wherein one of the first sub-unit (16) and the second sub-unit (20) comprises a punch (11) and wherein the respective other one of the first sub-unit (16) and the second sub-unit (20) comprises a counter-punch (13), wherein the punch (11) and the counter-punch (13) are configured to press the workpiece (30) in between them.

4. The device (10) according to any of the previous claims,
wherein at least one of the workpiece processing units (18.1-18.6, 18.1'-18.6') is a workpiece loading unit that is configured to load the workpiece (30) that is in an unprocessed state.

5. The device (10) according to any of the previous claims,
wherein at least one of the workpiece processing units (18.1-18.6, 18.1'-18.6') is a workpiece unloading unit that is configured to unload the processed workpiece (30) from the device (10).

6. The device (10) according to any of the previous claims,
wherein the workpiece processing units (18.1-18.6, 18.1'-18.6') are equidistantly spaced from one another; and/or
wherein the curved path (P) defines at least a section of a circular circumference.

7. The device (10) according to any of the previous claims,
wherein the workpiece processing units (18.1-18.6, 18.1'-18.6') are subdivided into a first set of workpiece processing units (18.1-18.6) that are distributed along a first segment of the curved path (P) and a second set of workpiece processing units (18.1'-18.6') that are distributed along a second segment of a curved path (P), wherein the first and second set comprise similar types of workpiece processing units (18.1-18.6, 18.1'-18.6').

8. The device (10) according to claim 7,
wherein the first set and second set of workpiece processing units (18.1-18.6, 18.1'-18.6') are arranged in point symmetry with respect to the rotation axis (R).

9. The device (10) according to claim 7 or 8,
wherein each of the first and second segment comprises a section of a circular circumference that extends concentrically with respect to the rotation axis (R); and/or
wherein each of the first and second segment extends along an arc length of between at least 90° and up to 180°.

10. The device (10) according to any of the previous claims,
wherein the workpiece transfer unit (22) has a number of receiving sections (27) that are each configured to receive a workpiece (30),
in particular wherein the number of the receiving sections (27) matches the number of the workpiece processing units (18.1-18.6, 18.1'-18.6') and/or wherein the workpiece transfer unit (22) is arrangeable so that the circumferential positions of the receiving sections (27) about the rotation axis (R) matches the circumferential positions of the workpiece processing units (18.1-18.6, 18.1'-18.6').

11. The device (10) according to claim 10,
wherein the receiving sections (27) are configured to position the workpiece (30) by means of a form fit.

12. The device (10) according to any of the previous claims,
wherein the workpiece transfer unit (22) is configured to move the at least one workpiece (30) along a surface area of the device (10), wherein at least the press-processing unit comprises a free space (33) when assuming a non-processing state, wherein the workpiece transfer unit (22) is configured to move the workpiece into and out of said free space (33).

13. The device (10) according to claim 12,
wherein a receiving section (27) of the workpiece transfer unit (22) receiving the workpiece (30) is configured to be aligned with the free space (33) and/or wherein the workpiece (30) is movable relative to the workpiece transfer unit (22) parallel to the rotation axis (R) during a processing by the press-processing unit.

14. A press (1) for press-processing workpieces (30),
the press (1) comprising a device (10) according to claim 3 and a force generating assembly that is configured to generate a force for moving the first and second plate (12, 14) relative to one another.

15. Method for press-processing workpieces (30), the method including:
moving, by a workpiece transfer unit (22) that is rotatable about a rotation axis (R) in only one direction, at least one workpiece (30) along a plurality of workpiece processing units (18.1-18.6, 18.1'-18.6') that are arranged along a curved path (P);
processing the workpiece (30) by each workpiece processing unit (18.1-18.6, 18.1'-18.6'), wherein at least one of the workpiece processing units (18.1-18.6, 18.1'-18.6') is a press-processing unit that is configured to perform a press-processing operation on the workpiece (30), wherein the workpiece transfer unit (22) is plate-shaped or comprises at least one plate-shaped member, wherein the workpiece transfer unit (22) comprises a number of recesses (26) that are distributed along its circumference, wherein the recesses (26) form each a receiving section (27) for receiving a single workpiece (30).
